# EUROPÄISCHE PATENTSCHRIFT

(11) **EP 1 272 379 B1**
(45) Veröffentlichungstag und Bekanntmachung des Hinweises auf die Patenterteilung: **19.05.2004**
(21) Anmeldenummer: 01921368.5
(22) Anmeldetag: 09.04.2001
(51) Int. Cl.: B60S 9/08

(54) **ABSTÜTZVORRICHTUNG FÜR SATTELSCHLEPPERAUFLIEGER**
SUPPORT DEVICE FOR ARTICULATED VEHICLE TRAILER
DISPOSITIF D'APPUI POUR REMORQUE DE VEHICULE ARTICULE

(30) Priorität: 10.04.2000 DE 10017322
(43) Veröffentlichungstag der Anmeldung: 08.01.2003
(73) Patentinhaber: Jost-Werke GmbH & Co. KG, 60528 Frankfurt am Main (DE)
(72) Erfinder: SCHMIDT, Dirk, 61462 Königstein (DE); ALGÜERA GALLEGO, José Manuel, 63739 Aschaffenburg (DE)
(74) Vertreter: Fuchs Mehler Weiss & Fritzsche
(86) Internationale Anmeldenummer: PCT/EP2001/004037
(87) Internationale Veröffentlichungsnummer: WO 2001/076923

(56) Entgegenhaltungen:
- EP-A- 0 398 705
- DE-A- 19 836 635

## Beschreibung

Die Erfindung betrifft eine Vorrichtung zum Abstützen eines Aufliegers eines Sattelschleppers mit einem senkrechten Spindeltrieb zur Höhenverstellung der Stützvorrichtung, einer horizontalen, insbesondere handkurbelgetriebenen Eingangswelle und einem Umlenkgetriebe zum Umlenken des Drehmomentes der Eingangswelle auf den Spindeltrieb, wobei das Umlenkgetriebe mindestens zwei beabstandete Zahnräder für Getriebestellungen unterschiedlichen Übersetzungsverhältnisses aufweist, die wahlweise mit einem Zahnkranz der Eingangswelle durch deren horizontales Verschieben in Eingriff bringbar sind.

Die Abstützvorrichtungen haben in der Regel mehrere Gänge mit unterschiedlichen Übersetzungen, die wahlweise durch Schalten gewählt werden können. Dabei handelt es sich meist um Zweiganggetriebe, bei denen ein Gang, der sogenannte Lastgang zum Anheben von Lasten, der zweite Gang, der sogenannte Schnellgang zum schnellen Teleskopieren der Winde ohne, bzw. mit geringer Last verwendet wird.

Eine derartige Abstützvorrichtung wird in der DE 19 836 635 A1 beschrieben, die als gattungsbildend anzusehen ist. Die bekannte Abstützvorrichtung weist neben den beiden Gangstufen zusätzlich eine Leerlaufstellung auf. In dieser Stufe ist die Drehmomentübertragung zwischen Eingangswelle und Ausgangswelle unterbrochen. Es können daher weder antreibende noch bremsende Drehmomente übertragen werden. Somit kann bei feststehender Abtriebswelle die Antriebswelle drehen und umgekehrt. Bei einer Abstützvorrichtung nutzt man die Leerlaufstellung dazu, durch Drehen an der Kurbel besser die Gangstufen zu finden. Wird jedoch die Abstützvorrichtung während der Fahrt, d.h. bei hochgekurbelten Innenbeinen in der Leerlaufstellung belassen, macht sich das fehlende Bremsmoment negativ bemerkbar. Begünstigt durch die während der Fahrt auftretenden Erschütterungen können die Innenbeine ablaufen und den Boden berühren. Dabei können starke Beschädigungen entstehen bis hin zum Verlust von Teilen auf der Straße. Auf die Notwendigkeit des Einlegens einer Gangstufe im Fahrbetrieb wird zwar seitens der Hersteller hingewiesen, diese Hinweise aber häufig in der alltäglichen Praxis nicht befolgt.

Die US 5,238,266 offenbart eine Abstützvorrichtung mit einem Getriebe ohne Leerlaufstellung. Hierdurch wird auch sichergestellt, daß immer eine Gangstufe eingelegt ist und somit das Getriebe das Ablaufen eines Innenbeines verhindert. Der wesentliche Nachteil dieser Abstützvorrichtung liegt darin, daß es beim Umschalten zwischen den Gangstufen eine Position gibt, in der beide Gangstufen gleichzeitig im Eingriff sind, wodurch sowohl der Schaltkomfort eingeschränkt ist als auch Beschädigungen an den sich im Eingriff befindenden Komponenten auftreten.

Die Aufgabe der Erfindung besteht folglich darin, eine Abstützvorrichtung bereitzustellen, deren Getriebe die Funktion einer Leerlaufstellung mit deren Vorteilen aufweist, wobei das unbeabsichtigte Ablaufen eines Innenbeins der Abstützvorrichtung verhindert werden soll.

Die Aufgabe wird erfindungsgemäß mit einer Abstützvorrichtung gelöst, bei der der Zahnkranz der Eingangswelle bei durchgehend gleicher Zahnteilung zwei Längenabschnitte unterschiedlichen Durchmessers aufweist, und zwar einen Abschnitt normalen Durchmessers mit voller Zahnausbildung, dessen axiale Länge unterhalb des Abstandes zweier Zahnräder liegt, zum Definieren einer Leerlaufstellung für die Eingangswelle, und einen Verlängerungsabschnitt radial verringerter Zahnlänge, der in Leerlaufstellung der Eingangswelle in ein Zahnrad hineinragt, wobei die Reduzierung der Zahnlänge des Verlängerungsabschnittes derart bemessen ist, daß die Eingangswelle in Leerlaufstellung bei feststehendem Zahnrad drehbar ist, das Zahnrad aber bei feststehender Eingangswelle an einer Drehung wegen Eingriffs mit den in ihrer Länge reduzierten Zähne gehindert ist.

Diese konstruktive Ausgestaltung ermöglicht zunächst ein Umschalten zwischen den beiden Gangstufen über eine Leerlaufstellung hinweg. Hierdurch wird ausgeschlossen, daß der in axialer Richtung verschiebbare Kurbeltrieb mit dem darauf befindlichen Zahnrad gleichzeitig in beide Gangstufen eingreift.

In der Leerlaufstellung dreht sich das mit einer reduzierten Zahnlänge ausgebildete Zahnrad des Verlängerungsabschnitts bei einem sich drehenden Kurbeltrieb berührungslos an der stehenden Außenverzahnung der Antriebswelle für die Lastgangstufe vorbei.

Im Fahrbetrieb kann es jedoch vorkommen, daß sich durch Schläge und Erschütterungen das Innenbein aufgrund seines Eigengewichts in dem Außenraum nach unten bewegt. Dieses wird erfindungsgemäß dadurch verhindert, daß die sich bei einer Abwärtsbewegung des Innenbeins drehende Außenverzahnung der Antriebswelle für die Lastgangstufe durch die reduzierte Zahnlänge der Verlängerungsabschnitt versperrt ist.

In einer bevorzugten Ausführungsform weist das Umlenkgetriebe genau zwei beabstandete Zahnräder für Getriebestellungen unterschiedlichen Übersetzungsverhältnisses auf. Das durchmesserkleinere Zahnrad bildet eine Schnellgangstufe mit einen von dem Kurbeltrieb angetriebenem Zahnrad, während das nichtverschiebbare durchmessergrößere Zahnrad durch axiales Verschieben des Kurbeltriebs in direktem Eingriff mit der Verzahnung des Kurbeltriebes bringbar ist.

Die Erfindung wird beispielhaft anhand der nachfolgenden Figuren erläutert.

Es zeigen die
- Figur 1: einen Vertikalschnitt der Abstützvorrichtung in der Schaltstellung Lastgang;
- Figur 2: einen Vertikalschnitt der Abstützvorrichtung in der Schaltstellung Schnellgang;
- Figur 3: einen Vertikalschnitt der Abstützvorrichtung in der Schaltstellung Leerlauf;
- Figur 4: eine Seitenansicht der Außenverzahnung der Antriebswelle für die Lastgangstufe und der Verzahnung des Kurbeltriebs aus der Ebene A-A gemäß Figur 1.

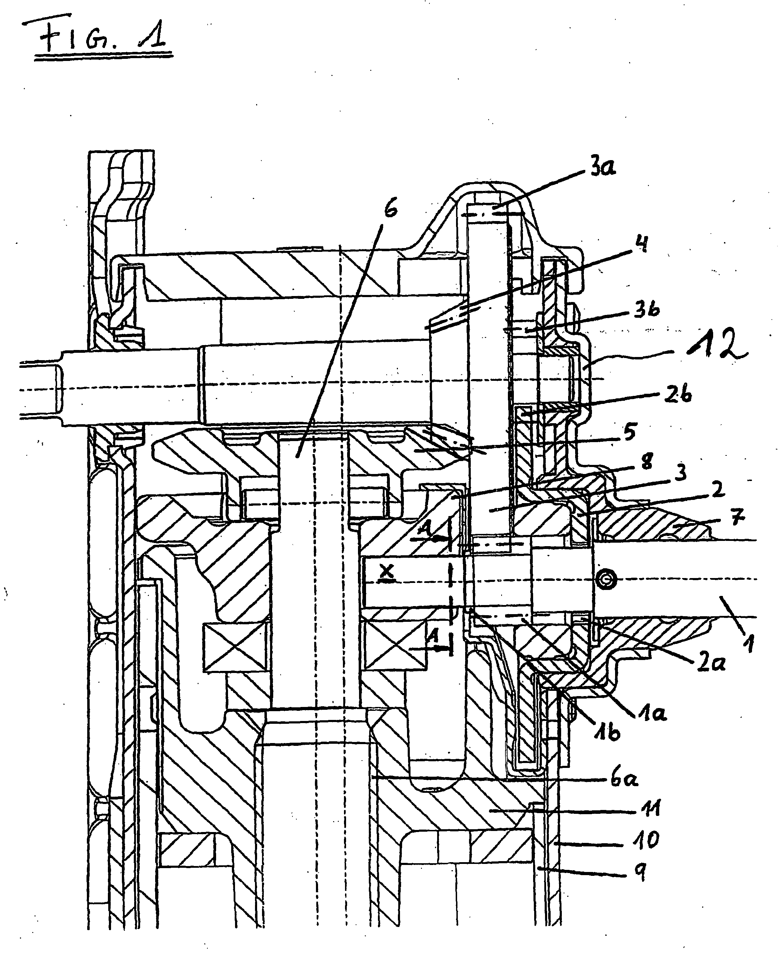

Die Figur 1 zeigt einen Vertikalschnitt der Abstützvorrichtung in dem Bereich des Getriebes in der Schaltstellung des Lastganges. Hierbei ist der Kurbeltrieb 1, der in einen am Gehäuse 12 angebrachten Lagerhalter 7 und an einer Lagerplatte 8 axial verschiebbar gelagert ist, derart positioniert, daß der Kurbeltrieb mit seinem spindelseitigen Ende X in einer maximalen Einführstellung in der Lagerplatte 8 aufgenommen ist und sich die Verzahnung des Kurbeltriebs 1a mit der Außenverzahnung 3a der Antriebswelle 3 für die Lastgangstufe in Eingriff befindet.

In axialer Richtung, versetzt zu der Außenverzahnung 3a, ist ebenfalls auf der Antriebswelle 3 drehfest eine Kegelverzahnung 4 angeordnet, die wiederum mit der komplementär angeordneten Verzahnung des Kegelrades 5 in Eingriff steht. Das Kegelrad 5 leitet das Drehmoment in die Spindel 6 ein. Die Spindel 6 hat ein Gewinde 6a, in dem eine Spindelmutter 11 läuft. Die Spindel selbst ist in der Lagerplatte 8 gelagert, die fest mit dem Schaftrohr 10 verbunden ist. Die Spindelmutter 11 ist mit dem Rohr des Innenbeines 9 verbunden. Die Drehbewegung der Spindel 6 führt zu einer axialen Bewegung der Spindelmutter 11 und somit zu einer axialen Relativbewegung zwischen Schaftrohr 10 und Rohr des Innenbeines 9. Die Rohre werden zueinander teleskopiert.

Bei einem Betrieb der Abstützvorrichtung im Lastgang werden die Kräfte und Momente über den Kurbeltrieb 1 eingeleitet, von dort über die Antriebswelle 3 und die Kegelverzahnung 4 der Antriebswelle 3 auf das Kegelrad 5 übertragen und bewegen über die Spindel 6 und die Spindelmutter 11 das Innenrohr 9.

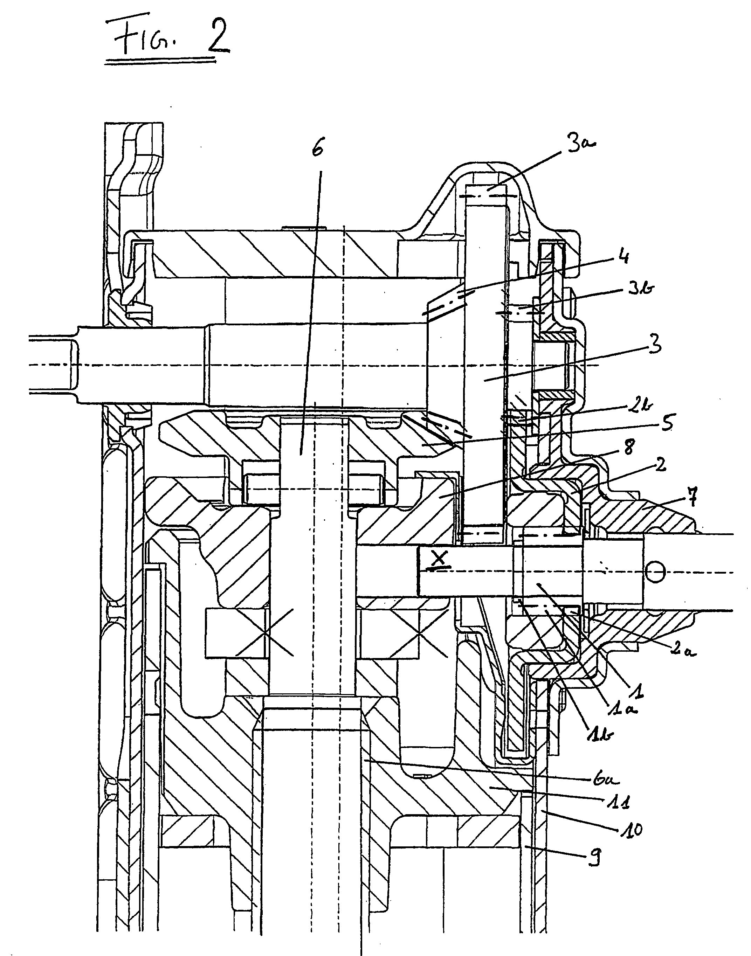

In der Figur 2 ist ein Querschnitt der Abstützvorrichtung in der Schaltstellung Schnellgang dargestellt. Der Kurbeltrieb 1 ist axial nach außen verschoben und nur mit einem Teil seines spindelseitigen Endes X des Kurbeltriebs 1 in der Lagerplatte 8 gelagert. In dieser Stellung wirkt die Verzahnung 1a des Kurbeltrieb 1 mit der Innenverzahnung 2a des Zahnrades 2 zusammen. Das Zahnrad 2 ist auch an seinem Außendurchmesser verzahnt. Diese Außenverzahnung 2b ist in ständigem Eingriff mit einer weiteren Verzahnung 3b der Antriebswelle 3, die ebenfalls mit der Kegelverzahnung 4 drehfest verbunden ist.

Im Schnellgang verlaufen die Kräfte und Momente ausgehend von dem Kurbeltrieb 1 über das Zahnrad 2 des Schnellganges, die Außenverzahnung 3b der Antriebswelle 3 und die Kegelverzahnung 4 der Antriebswelle 3 auf das Kegelrad 5. Dieses sorgt für eine Drehung der Spindel 6 und ein Verfahren der Spindelmutter 11 und des daran befestigten Rohres 9 des Innenbeines.

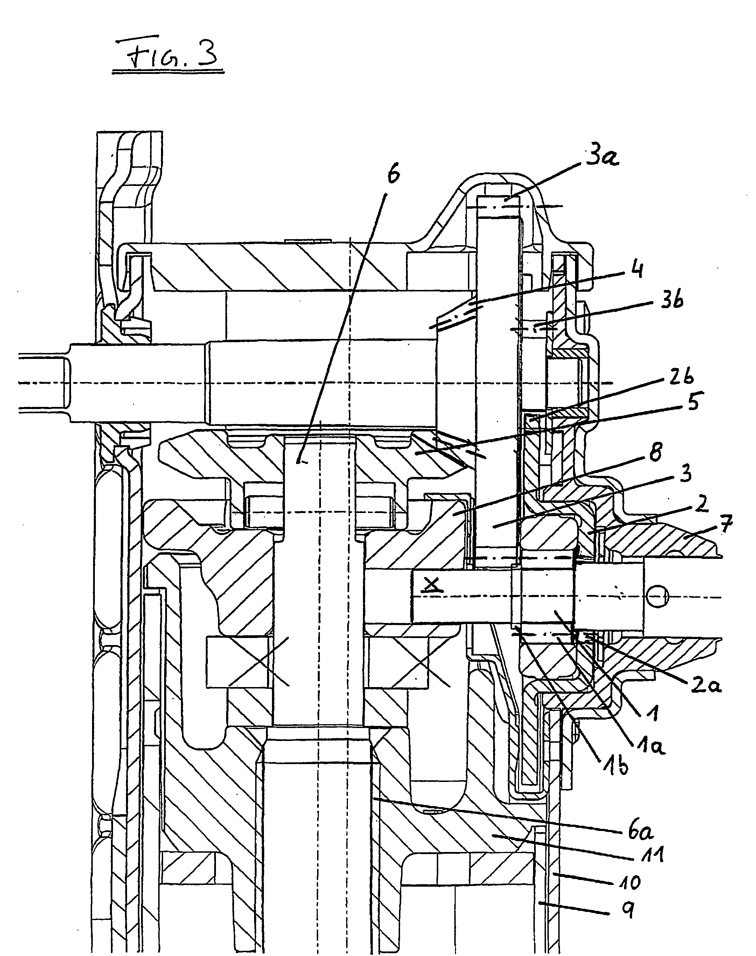

Die Figur 3 zeigt einen Querschnitt der Abstützvorrichtung in der Schaltstellung Leerlauf. In dieser Schaltstellung ist der Kurbeltrieb 1 axial derart verschoben, daß sich die Verzahnung 1a des Kurbeltriebs 1 in axialer Richtung zwischen der Außenverzahnung 3a der Antriebswelle 3 für die Laststufe und der Innenverzahnung 2a des Zahnrades des Schnellganges befindet. Bei Drehung des Kurbeltriebs 1 wird kein Drehmoment von der Verzahnung 1a des Kurbeltriebs auf die Außenverzahnung 3a der Antriebswelle 3 für die Lastgangstufe oder die Innenverzahnung 2a des Schnellganges übertragen.

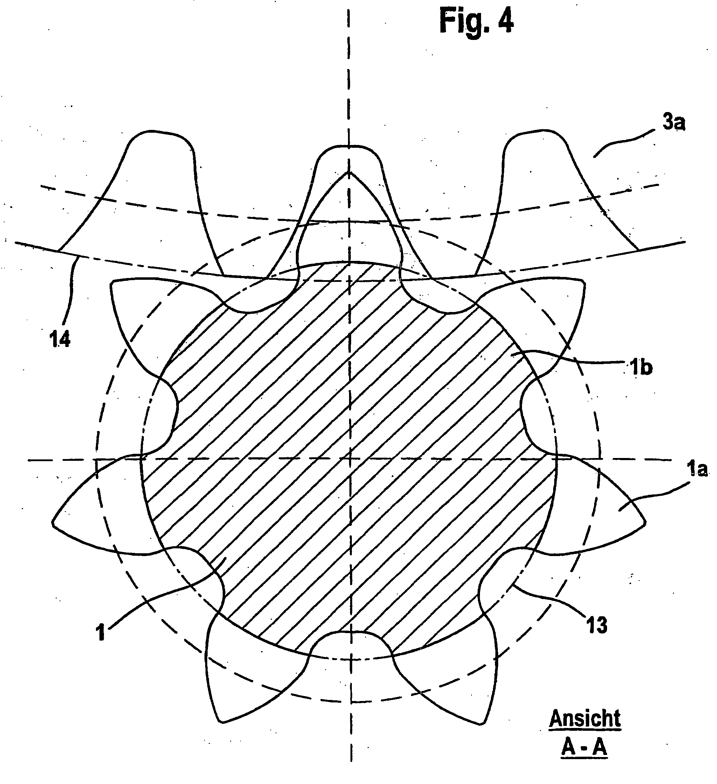

In Richtung des spindelseitigen Endes X des Kurbeltriebs 1 ist die Verzahnung 1a des Kurbeltriebs 1 als reduzierte Verzahnung 1b des Kurbeltriebs 1 ausgeführt. Hierzu wurde der Kopfkreis der ursprünglichen Verzahnung 1a des Kurbeltriebs 1 auf die in der Figur 4 dargestellte reduzierte Verzahnung 1b des Kurbeltriebs 1 verringert. Die reduzierte Verzahnung 1b mit dem Kopfkreis 13 des Kurbeltriebs 1 ermöglicht eine Drehung des Kurbeltriebs, ohne daß die reduzierte Verzahnung 1b die feststehende Verzahnung 3a der Antriebswelle 3 berührt (s. Figur 4). Der Kopfkreis 13 ragt hierbei in die Lücke zwischen zwei Zähnen der Außenverzahnung 3a und berührt diese nicht.

Bei umgekehrtem Kraftfluß, ausgehend von dem Rohr 9 des Innenbeins über die Lagerplatte 8 und die Spindel 6 sowie die Kegelverzahnung 4, 5 zu der drehfest an der Antriebswelle angebrachten Außenverzahnung 3a, wird die Außenverzahnung 3a der Antriebswelle 3 bei feststehendem Kurbeltrieb, z.B. bei eingehängtem Kurbeltrieb, durch die reduzierte Verzahnung 1b des Kurbeltriebes 1 versperrt. Verhindert wird dies dadurch, daß sich die Zahnköpfe der Verzahnung 3a bei Drehbewegung entlang ihres Kopfkreises 14 bewegen müßten, es hier dann aber zu einer Überschneidung mit den Zähnen 1b des Kurbeltriebes 1 käme. Hieraus resultiert, daß bei einer eingehängten Kurbel oder schon durch das Eigengewicht der nicht eingehängten Kurbel die Spindel 6 auch in der Leerlaufstellung am Rotieren gehindert wird und die Stützwinde somit gegen Ablaufen des Rohres 9 des Innenbeines gesichert ist.

### Bezugszeichen:

- 1: Kurbeltrieb
- 1a: Verzahnung des Kurbeltriebe
- 1b: reduzierte Verzahnung des Kurbeltriebes
- 2: Zahnrad des Schnellganges
- 2a: Innenverzahnung des Zahnrades des Schnellganges
- 2b: Außenverzahnung des Zahnrades des Schnellganges
- 3: Antriebswelle
- 3a: Außenverzahnung der Antriebswelle für Lastgangstufe
- 3b: Außenverzahnung der Antriebswelle für Schnellgangstufe
- 4: Kegelverzahnung der Antriebswelle
- 5: Kegelrad
- 6: Spindel
- 6a: Gewinde der Spindel
- 7: Lagerhalter
- 8: Lagerplatte
- 9: Rohr des Innenbeines
- 10: Rohr des Schaftes (Außenrohr)
- 11: Spindelmutter
- 12: Gehäuse
- 13: Kopfkreis
- 14: Kopfkreis
- X: spindelseitiges Ende des Kurbeltriebs

## Patentansprüche

1. Vorrichtung zum Abstützen eines Aufliegers eines Sattelschleppers mit einem senkrechten Spindeltrieb (6, 11) zur Höhenverstellung der Stützvorrichtung, einer horizontalen, insbesondere handkurbelgetriebenen Eingangswelle (1) und einem Umlenkgetriebe (3, 4, 5) zum Umlenken des Drehmomentes der Eingangswelle (1) auf den Spindeltrieb (6, 11), wobei das Umlenkgetriebe (3, 4, 5) mindestens zwei beabstandete Zahnräder (3a, 3b) für Getriebestellungen unterschiedlichen Übersetzungsverhältnisses aufweist, die wahlweise mit einem Zahnkranz der Eingangswelle (1) durch deren horizontales Verschieben in Eingriff bringbar sind, **dadurch gekennzeichnet,**
**daß** der Zahnkranz der Eingangswelle (1) bei durchgehend gleicher Zahnteilung zwei axiale Längenabschnitte (1a, 1b) unterschiedlichen Durchmesser aufweist, und zwar einen Abschnitt (1a) normalen Durchmessers mit voller Zahnausbildung, dessen axiale Länge unterhalb des Abstandes zweier Zahnräder liegt, zum Definieren einer Leerlaufstellung für die Eingangswelle (1), und einen Verlängerungsabschnitt (1b) radial verringerter Zahnlänge, der in Leerlaufstellung der Eingangswelle (1) in ein Zahnrad (3a) hinein ragt, wobei die Reduzierung der Zahnlänge des Verlängerungsabschnittes (1b) derart bemessen ist, daß die Eingangswelle (1) in Leerlaufstellung bei feststehendem Zahnrad (3a) drehbar ist, das Zahnrad (3a) aber bei feststehender Eingangswelle (1) an einer Drehung wegen Eingriffs mit den in ihrer Länge reduzierten Zähne (1b) gehindert ist.

2. Vorrichtung nach Anspruch 1, **dadurch gekennzeichnet, daß** das Umlenkgetriebe (3, 4, 5) genau zwei beabstandete Zahnräder (3a, 3b) für Getriebestellungen unterschiedlichen Übersetzungsverhältnisses aufweist.

## Claims

1. Apparatus for the supporting of a trailer of an articulated lorry with a vertical spindle drive (6, 11) for the height adjustment of the supporting apparatus, a horizontal, especially hand-crank operated input shaft (1) and a transfer transmission (3, 4, 5) for the transfer of torque from the input shaft (1) to the spindle drive (6, 11), wherein the transfer transmission (3, 4, 5) incorporates at least two separate gearwheels (3a, 3b) for the changing of the transmission to different transmission ratios, which may be selectively brought into engagement with a gear ring of the input shaft (1) through their horizontal displacement, **characterised in that** the gear ring of the input shaft (1) has two longitudinal axial sections (1a, 1b) which, while with even teeth distribution, are of different diameters, i.e. one section (1a) with a normal diameter with full tooth profile, and of which the axial length is shorter than the distance between two gearwheels, for defining a neutral position for the input shaft (1), and an extension section (1b) of radially reduced tooth heights which projects into a gearwheel (3a) in the neutral position of the input shaft (1), wherein the reduction of the tooth height of the extension section (1b) is dimensioned in such a way that the input shaft (1) can be rotated in the neutral position whilst the gearwheel (3a) is stationary, but rotation of the gearwheel (3a) relative to stationary input shaft (1) is obstructed by engagement with the toothing (1b) of reduced height.

2. Apparatus according to Claim 1, **characterised in that** the transfer transmission (3, 4, 5) is provided with exactly two separate gearwheels (3a, 3b) for transmission positions with different transmission ratios.

## Revendications

1. Dispositif pour- l'appui d'une remorque de véhicule articulé, avec une transmission à broche (6, 11) verticale, pour le réglage en hauteur du dispositif d'appui, un arbre d'entrée (11), entraîné en particulier par une manivelle et une transmission de renvoi d'angle (3, 4, 5) pour le renvoi d'angle-du couple de rotation de l'arbre dentée (1) sur la transmission à broche (6, 11), la transmission de renvoi d'angle (3, 4, 5), présentant au moins deux roues dentées (3a, 3b) espacées l'une de l'autre, pour des réglages de transmission à des rapports de transmission différents, qui sont susceptibles d'engrener, au choix, avec une couronne dentée de l'arbre dentée (1), au moyen de son déplacement horizontal, **caractérisé en ce que**
la couronne dentée de l'arbre d'entrée (1), pour une division de denture continue identique, présente deux tronçons de longueur (1a, 1b) de diamètres différents et, précisément, un tronçon (1a) à diamètre normal, à pleine denture, dont la longueur axiale est inférieure à l'espacement de deux roues dentées, pour la définition d'une position de marche à vide pour l'arbre d'entrée (1), et un tronçon de prolongement (1b) à longueur de denture radialement diminuée, pénétrant dans une roue dentée (3a) lorsque l'arbre d'entrée (1) est en position de marche à vide, la réduction de la longueur de denture du tronçon de prolongement (1b) étant dimensionnée de manière que, en position de marche à vide, l'arbre d'entrée (1) soit susceptible de tourner lorsque la roue dentée (3a) est immobilisée, mais que, cependant, lorsque l'arbre d'entrée (1) est immobilisé, la roue dentée (3a) soit empêchée de tourner du fait de l'engrènement avec les dents (1b) à longueur réduite.

2. Dispositif selon la revendication 1, **caractérisé en ce que** la transmission de renvoi (3, 4, 5) présente précisément deux roues dentées (3a, 3b) espacées pour des positions de transmission correspondant à des rapports de transmission différents.
